# EUROPEAN PATENT APPLICATION

(11) **EP 2 763 492 A1**
(43) Date of publication of application: **06.08.2014**
(21) Application number: 12879155.5
(22) Date of filing: 28.09.2012
(51) Int. Cl.: H04W 76/02

(54) **USER GROUPING METHOD AND APPARATUS**

(71) Applicant: Huawei Technologies Co., Ltd., Shenzhen, Guangdong 518129 (CN)
(72) Inventor: HU, Chunli, Shenzhen, Guangdong 518129 (CN)
(74) Representative: Pfenning, Meinig & Partner GbR
(86) International application number: PCT/CN2012/082402
(87) International publication number: WO 2014/047912

(57) **Abstract**

Embodiments of the present invention relate to the field of communications and provide a user grouping method and apparatus, so as to group served users. The method, includes: determining group number information of a user group to which a UE belongs according to a received user information parameter of the user equipment UE and preconfigured mapping information, where the mapping information is a mapping relationship between the user information parameter and the group number information of the user group, and is preconfigured according to an operating policy of an operator, and the user information parameter is an information parameter used for identifying a feature of the UE; and identifying the user group to which the UE belongs by using group information, where the group information includes: the group number information. The embodiments of the present invention are applicable to a user grouping scenario.

## Description

### TECHNICAL FIELD

The present invention relates to the field of communications, and in particular, to a user grouping method and apparatus.

### BACKGROUND

LTE (Long Term Evolution, Long Term Evolution) is long term evolution for a UMTS (Universal Mobile Telecommunications System, Universal Mobile Telecommunications System) technology based on 3GPP (The 3rd Generation Partnership Project, The 3rd Generation Partnership Project), and is a transition between 3G and 4G technologies, which improves and enhances an air access technology of the 3G. LTE networks are classified into non-shared networks and shared networks. In a non-shared network, base stations in the network are not shared, and each operator deploys and uses their own base stations. In a shared network, a base station in the network is shared, and multiple operators jointly deploy and use the shared base station. At a base station side in a non-shared network, all users are served by only one operator, that is to say, users served by the same base station belong to the same operator. In a shared network, according to a stipulation in the 3GPP protocol, each user needs to provide a PLMN ID (Public Land Mobile Network Identity, public land mobile network identity) of an operator selected by the user when accessing the network; in this case, at a base station side, multiple operators serve different users, that is to say, users served by the same base station may belong to different operators.

In a non-shared network and a shared network, sometimes it is necessary to carry out statistics on a certain class of users at a base station side, for example, carry out statistics on roaming users. However, in the non-shared network and shard network in the prior art, served users cannot be grouped according to a requirement at the base station side, and better services cannot be provided for operators.

### SUMMARY

Embodiments of the present invention provide a user grouping method and apparatus, so as to group served users.

In order to achieve the above objective, the embodiments of the present invention adopt the following technical solutions:

In a first aspect, an embodiment of the present invention provides a user grouping method, including: determining group number information of a user group to which a UE belongs according to a received user information parameter of the user equipment UE and preconfigured mapping information, where the mapping information is a mapping relationship between the user information parameter and the group number information of the user group, and is preconfigured according to an operating policy of an operator, and the user information parameter is an information parameter used for identifying a feature of the UE; and identifying the user group to which the UE belongs by using group information, where the group information includes: the group number information.

A first possible implementation manner includes: allocating resources to at least one user group according to a resource proportion of the at least one user group.

In combination with the first aspect or the first possible implementation manner of the first aspect, a second possible implementation manner includes: carrying out performance statistics on the at least one user group.

In a second aspect, an embodiment of the present invention provides a user grouping apparatus, including: a determining unit, configured to determine group number information of a user group to which a UE belongs according to a received user information parameter of the user equipment UE and preconfigured mapping information, where the mapping information is a mapping relationship between the user information parameter and the group number information of the user group, and is preconfigured according to an operating policy of an operator, and the user information parameter is an information parameter used for identifying a feature of the UE; and an identifying unit, configured to identify the user group to which the UE belongs by using group information, where the group information includes: the group number information.

In a third aspect, an embodiment of the present invention provides a user grouping apparatus, including: a processor, configured to determine group number information of a user group to which a UE belongs according to a received user information parameter of the user equipment UE and preconfigured mapping information, where the mapping information is a mapping relationship between the user information parameter and the group number information of the user group, and is preconfigured according to an operating policy of an operator, and the user information parameter is an information parameter used for identifying a feature of the UE; the processor is further configured to identify the user group to which the UE belongs by using group information, where the group information includes: the group number information.

The embodiments of the present invention provide a user grouping method and apparatus, where group number information of a user group to which a UE belongs is determined by searching preconfigured mapping information according to a received user information parameter of the UE, and the user group to which the UE belongs is identified according to group information including the group number information, thereby grouping served users, so that it is possible for an operator to perform related processing on different user groups, and better services are provided for the operator.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a user grouping method according to an embodiment of the present invention;
FIG. 2 is a schematic diagram of another user grouping method according to an embodiment of the present invention;
FIG. 3 is a schematic diagram of still another user grouping method according to an embodiment of the present invention;
FIG. 4 is a schematic structural diagram of a user grouping apparatus according to an embodiment of the present invention;
FIG. 5 is a schematic structural diagram of another user grouping apparatus according to an embodiment of the present invention;
FIG. 6 is a schematic structural diagram of another user grouping apparatus according to an embodiment of the present invention;
FIG. 7 is a schematic structural diagram of another user grouping apparatus according to an embodiment of the present invention;
FIG. 8 is a schematic structural diagram of another user grouping apparatus according to an embodiment of the present invention; and
FIG. 9 is a schematic structural diagram of another user grouping apparatus according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

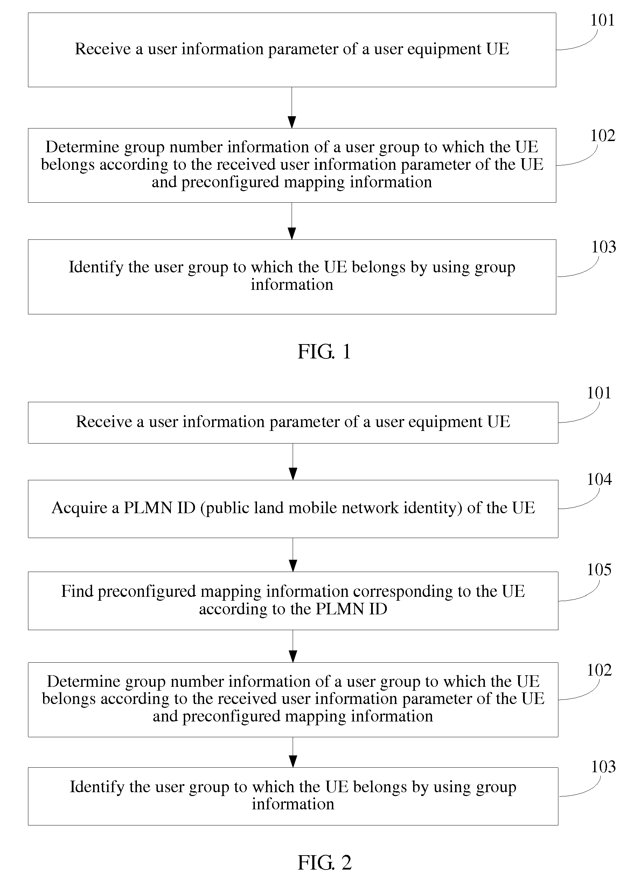

An embodiment of the present invention provides a user grouping method. As shown in FIG. 1, the method includes the following steps:

It should be noted that an apparatus for grouping served users according to a user grouping method provided by an embodiment of the present invention may be a base station, a network controller, or other equipment, which is not limited in the present invention. In all embodiments of the present invention, a base station is used as an example for description.

101: Receive a user information parameter of a user equipment UE.

The user information parameter is a parameter used for identifying feature information of the UE (User Equipment, user equipment).

Specifically, accessing a base station by the UE is classified into two cases. The first case is that before accessing this base station, the UE does not access any other base station, that is to say, it is the first time that the UE accesses a base station; alternatively, the UE has accessed another neighboring base station before accessing this base station, and needs to be handed over from the another neighboring base station to this base station, and when the neighboring base station and the base station are connected with different core networks, the base station receives a user information parameter of the UE sent by a core network that the base station is connected with.

The second case is that the UE has accessed another neighboring base station before accessing this base station and needs to be handed over from the another neighboring base station to this base station, and the neighboring base station and the base station are connected with the same core network; in this case, the base station receives a user information parameter of the UE sent by the neighboring base station.

Optionally, the user information parameter is an SPID (Subscriber Profile ID for RAT/Frequency Priority, subscriber profile ID for RAT/frequency priority). The SPID parameter is an index value for describing user information.

It should be noted that the user information parameter may also be a QCI (QOS Class Identifier, quality of service class identifier) field or another message field in an interface, where the interface may be an S1 interface, an X2 interface, or another interface; the present invention does not limit which message field in which interface the user information parameter is.

It should be noted that in all embodiments of the present invention, the user information parameter of the user equipment UE refers to a user information parameter of the UE at a current moment.

It should be noted that when the core network or the neighboring base station sends the user information parameter of the UE, the user information parameter of the UE may be carried in another message. For example, if the UE accesses the base station for the first time, the core network may carry the user information parameter of the UE in an initial context setup request or in another message and send it to the base station. If the UE is handed over from a neighboring base station to the base station, and the neighboring base station and the base station are connected with different core networks, the core network may carry the user information parameter of the UE in a handover request or in another message and send it to the base station. The neighboring base station may also carry the user information parameter of the UE in a handover request or in another message and send it to the base station. Definitely, the core network or the neighboring base station may also directly send the user information parameter of the UE to the base station. As long as the base station is capable of receiving the user information parameter of the UE, the present invention does not limit the manner in which the core network or the neighboring base station sends the user information parameter of the UE to the base station.

102: Determine group number information of a user group to which the UE belongs according to the received user information parameter of the UE and preconfigured mapping information.

The mapping information is a mapping relationship between the user information parameter and the group number information of the user group.

It should be noted that the mapping information is preconfigured according to an operating policy of an operator. The user group is preset by an operator according to an operating policy.

Specifically, after receiving the user information parameter of the UE, the base station searches the stored and preconfigured mapping information according to the user information parameter of the UE, so as to acquire the group number information of the user group to which the UE belongs from the preconfigured mapping information.

It should be noted that the base station may store the preconfigured mapping information in the form of a table. For example, as shown in Table 1 below, Table 1 shows mapping relationships between user information parameters (SPID value) and group number information

(group no.). Definitely, the preconfigured mapping information may also be stored in another form, which is not limited in the present invention.

**Table 1**

| SPID value (user information parameter) | group no. (group number information) |
|---|---|
| 0 | 1 |
| 1 | 1 |
| 2 | 2 |
| ...... | ...... |
| 254 | 3 |
| 255 | 3 |

It should be noted that, as can be seen from Table 1, different SPID values may be mapped to group number information of the same user group, and definitely, may also be mapped to group number information of different user groups. As for group number information of which user group an SPID value is specifically mapped to, it is determined by each operator. If the base station serves multiple operators, operating policies of different operators may be the same or different. That is to say, preconfigured mapping information corresponding to different operators stored by the base station may be the same or different. If preconfigured mapping information corresponding to different operators is the same, the base station may store only one copy of the preconfigured mapping information. If preconfigured mapping information corresponding to each operator is different, the base station should store a copy of corresponding preconfigured mapping information for each operator.

103: Identify the user group to which the UE belongs by using group information.

The group information includes the group number information.

Specifically, the user group to which the UE belongs is identified by using the group number information in the group information.

For example, if the group number information corresponding to the UE is 1, and the SPID value is 0, the group number information 1 is used to identify the user group to which the UE whose SPID is 0 belongs.

If operating policies of different operators are the same, the preconfigured mapping information corresponding to different operators may be the same, and in this case, UEs of different operators and with the same user information parameter may belong to the same user group, and the user group to which the UEs belong is identified by using the group number information.

For example, an operator selected by UE1 is operator A, a PLMN ID (Public Land Mobile Network Identity, public land mobile network identity) thereof is S1, and an SPID of UE1 is 0; an operator selected by UE2 is operator A, a PLMN ID thereof is S1, and an SPID of UE2 is 1; an operator selected by UE3 is operator B, a PLMN ID thereof is S2, and an SPID of UE3 is 0. Group number information to which the SPID of UE1 is mapped according to the preconfigured mapping information is 1, group number information to which the SPID of UE2 is mapped according to the preconfigured mapping information is 2, and group number information to which the SPID of UE3 is mapped according to the preconfigured mapping information is 1. In this case, the group information includes group number information; then, a user group to which UE1 belongs is identified by 1, a user group to which UE2 belongs is identified by 2, and a user group to which UE3 belongs is identified by 1. When a user group to which a user belongs is identified only according to group number information, although UE1 and UE3 select different operators, UE1 and UE3 belong to the same user group, which is identified by 1.

An embodiment of the present invention provides a user grouping method, where a user information parameter of a UE is received, preconfigured mapping information is searched according to the user information parameter so as to determine group number information of a user group to which the UE belongs, and the user group to which the UE belongs is identified according to the group number information, thereby grouping served users, so that it is possible for an operator to perform related processing on different user groups, and better services are provided for the operator.

As shown in FIG. 2, before step 102, the method further includes the following steps:

104: Acquire a public land mobile network identity PLMN ID of the UE.

Specifically, if the UE does not access any other base station before accessing this base station, that is to say, if it is the first time that the UE accesses a base station, when the UE sends a link setup request, the PLMN ID of the UE is carried, that is, the link setup request carries the PLMN ID of the UE; when receiving the link setup request, the base station acquires the PLMN ID of the UE.

If the UE has accessed another neighboring base station before accessing this base station, when sending a handover related message to the base station, the core network or the neighboring base station adds the PLMN ID of the UE into the handover related message; then, when receiving the handover related message sent by the core network or the neighboring base station, the base station acquires the PLMN ID of the UE.

In this case, the group information further includes the PLMN ID.

In this case, the step 103 of identifying the user group to which the UE belongs by using group information includes:
identifying the user group to which the UE belongs by jointly using the group number information and the PLMN ID.

Specifically, the PLMN ID of each operator is different, so it is impossible that users of different operators belong to the same user group. That is to say, users of different operators belong to different user groups. In this case, the user group to which the UE belongs is identified by jointly using the PLMN ID and the group number information; the user group to which the UE belongs may be identified in the form of PLMN ID + group number information.

As described in the foregoing example, an operator selected by UE1 is operator A, a PLMN ID thereof is S1, and an SPID of UE1 is 0; an operator selected by UE2 is operator A, a PLMN ID thereof is S1, and an SPID of UE2 is 1; an operator selected by UE3 is operator B, a PLMN ID thereof is S2, and an SPID of UE3 is 0. Group number information to which the SPID of UE1 is mapped according to the preconfigured mapping information is 1, group number information to which the SPID of UE2 is mapped according to the preconfigured mapping information is 2, and group number information to which the SPID of UE3 is mapped according to the preconfigured mapping information is 1. In this case, the group information includes group number information and a PLMN ID; although group number information of users of different operators is the same, it is impossible that the users belong to the same user group because the PLMN IDs are different. In this case, a user group to which UE1 belongs is identified in the form of S1+1, a user group to which UE2 belongs is identified in the form of S1+2, and a user group to which UE3 belongs is identified in the form of S2+1.

It should be noted that the user group to which the UE belongs may also be identified by jointly using the PLMN ID and group number in another form, which is not limited in the present invention.

By identifying the user group to which the UE belongs according to the group number information and PLMN ID of the group information, UEs of different operators and with the same group number information are made to belong to different user groups, and the UEs are further classified, thereby grouping served users, so that it is possible for an operator to perform related processing on different user groups, and better services are provided for the operator.

105: Find preconfigured mapping information corresponding to the UE according to the PLMN ID.

Specifically, if the base station serves multiple operators, operating policies of different operators may be the same or different. That is to say, preconfigured mapping information corresponding to different operators stored by the base station may be the same or different. If preconfigured mapping information corresponding to each operator is different, the base station should store a copy of corresponding preconfigured mapping information for each operator. In this case, according to the PLMN ID, the base station finds preconfigured mapping information of an operator corresponding to the UE.

Through steps 104 and 105, the PLMN ID of the UE is acquired; when the base station stores multiple pieces of preconfigured mapping information, the preconfigured mapping information corresponding to the UE is found according to the PLMN ID, thereby determining group number information of the UE; and the user group to which the UE belongs is identified according to the group number information and PLMN ID of the group information, so that UEs of different operators and with the same group number information belong to different user groups, thereby grouping served users of different operators, so that it is possible for an operator to perform related processing on different user groups, and better services are provided for the operator.

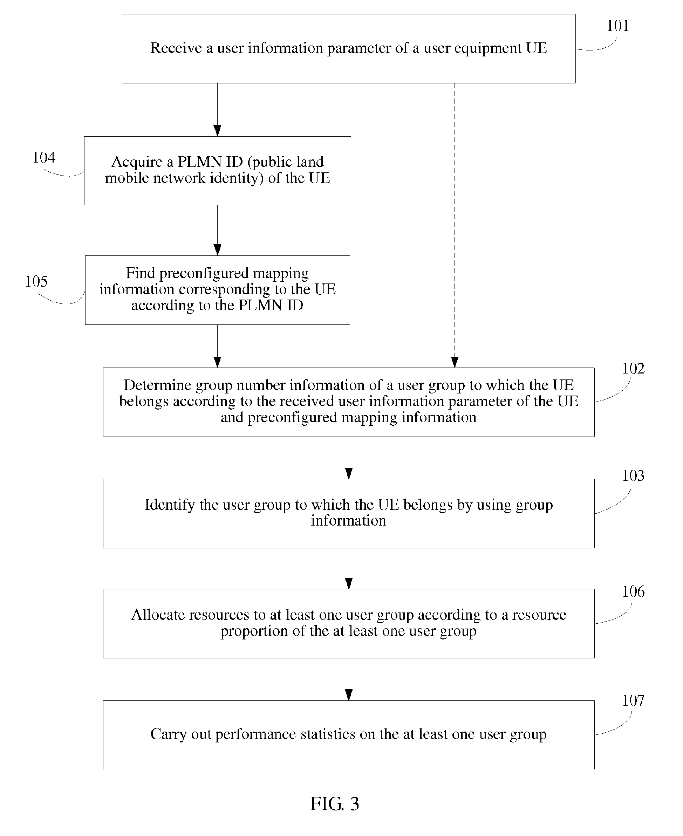

After grouping the users served by the base station into different user groups, as shown in FIG. 3, the method further includes the following steps:

106: Allocate resources to at least one user group according to a resource proportion of the at least one user group.

The base station determines the user group to which the UE belongs according to the user information parameter of the UE and the preconfigured mapping information, or the base station determines the user group to which the UE belongs according to the user information parameter of the UE, the preconfigured mapping information, and the PLMN ID of the UE; therefore, the base station groups all UEs served by the base station into at least one user group. In this way, the base station may allocate resources according to different user groups.

Specifically, according to a resource proportion of at least one user group and statistical information about used resources of the at least one user group, the base station determines a priority of the at least one user group, and first allocates the resources to a user group with a high priority.

After determining the priority of the at least one user group, if resources required by the user group with a high priority are all resources of the base station, the base station allocates all the resources to the user group with a high priority. If system resources required by the user group with a high priority account for n% of all the resources of the base station, the base station allocates n% of all the resources to the user group with a high priority, where n is a number greater than 0 and less than 100.

It should be noted that 1-n% unused resources of the base station may be allocated by the base station to another user group, or may be reserved and not allocated to another user group, which is not limited in the present invention.

It should be noted that a resource proportion of each user group is preset by an operator.

If a first user group is present, resources of the first user group at a current moment are allocated to another user group.

It should be noted that the first user group is a user group that does not use any resource at the current moment.

Optionally, according to an attribute relationship between another user group and the first user group, the resources of the first user group at the current moment are allocated to the another user group.

For example, a user group belonging to the same operator as the first user group is present among other user groups, the resources of the first user group at the current moment are first allocated to the user group belonging to the same operator as the first user group.

It should be noted that according to an attribute relationship between another user group and the first user group may not only refer to according to whether the another user group belongs to the same operator as the first user group, but also refer to according to another attribute relationship, which is not limited in the present invention.

107: Carry out performance statistics on the at least one user group.

Specifically, according to different user groups, performance statistics is carried out on users in different user groups. For example, within a period, statistics is made on a resource volume of radio resources actually used by each user group, or statistics is made on actual handover performance indicator information of each user group, or statistics is made on another performance parameter.

It should be noted that the sequence of steps 106 and 107 may be adjusted as required; the present invention does not limit the sequence of steps 106 and 107, and the drawing only shows one situation.

After the served users are grouped through steps 106 and 107, resources are allocated to different user groups and statistics is made on performance information of different user groups, so that the operator provides better services for users, thereby improving user experience.

The embodiment of the present invention provides a user grouping method; a user information parameter of a UE is received, and preconfigured mapping information is searched according to the user information parameter so as to determine group number information of a user group to which the UE belongs; the user group to which the UE belongs is identified according to group information, where the group information includes the group number information. Alternatively, the group information includes the group number information and PLMN ID information. Served users are grouped; in addition, resource allocation and performance statistics are performed on different user groups; so that it is possible for an operator to perform related processing on different user groups, and better services are provided for the operator.

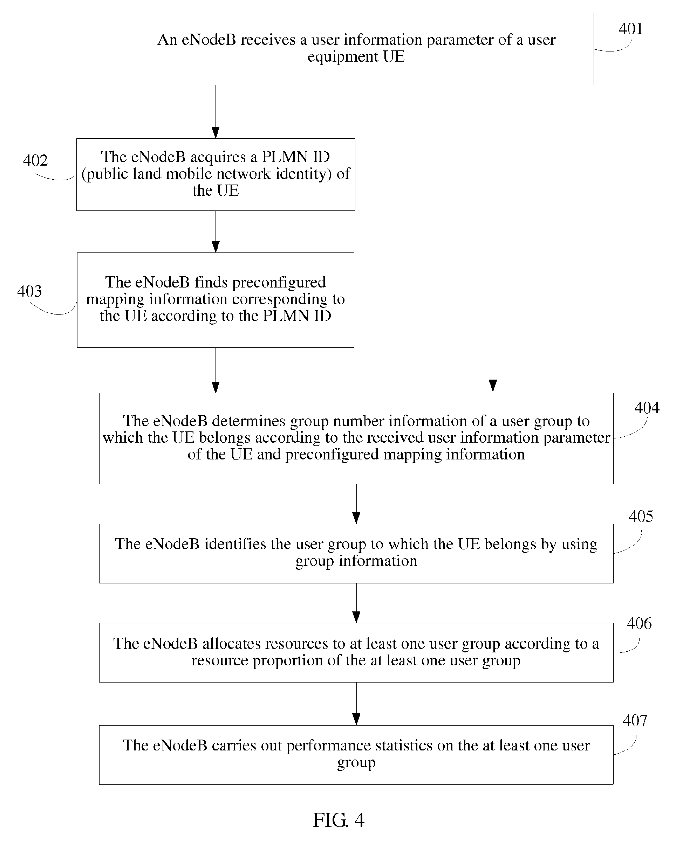

An embodiment of the present invention provides a user grouping method. As shown in FIG. 4, the method includes the following steps:

It should be noted that the user grouping method applies to an LTE (Long Term Evolution, long term evolution of 3GPP) scenario, and in this case, an apparatus using the user grouping method may be an LTE eNodeB (E-UTRAN NodeB, evolved UMTS (Universal Mobile Telecommunications System, Universal Mobile Telecommunications System) terrestrial radio access network NodeB (node B)).

It should be noted that in all embodiments of the present invention, the user grouping method may not only apply to an LTE scenario, but also apply to a GSM (Global System for Mobile Communications, Global System for Mobile Communications) scenario, and apply to a UMTS scenario. Definitely, the user grouping method may also apply to another radio network scenario, and the present invention does not limit an application scenario of user grouping.

401: An eNodeB receives a user information parameter of a UE.

Specifically, reference may be made to step 101, and description is not provided herein again.

It should be noted that if the eNodeB serves UEs of only one operator, steps 404-407 may be performed directly. When the eNodeB serves UEs of multiple operators, steps 402-407 are performed.

402: The eNodeB acquires a PLMN ID of the UE.

Specifically, reference may be made to step 104, and description is not provided herein again.

403: The eNodeB finds preconfigured mapping information corresponding to the UE according to the PLMN ID.

Specifically, reference may be made to step 105, and description is not provided herein again.

404: The eNodeB determines group number information of a user group to which the UE belongs according to the received user information parameter of the UE and the preconfigured mapping information.

Specifically, reference may be made to step 102, and description is not provided herein again.

405: The eNodeB identifies the user group to which the UE belongs by using group information.

Specifically, reference may be made to step 103, and description is not provided herein again.

406: The eNodeB allocates resources to at least one user group according to a resource proportion of the at least one user group.

Specifically, reference may be made to step 106, and description is not provided herein again.

407: The eNodeB carries out performance statistics on the at least one user group.

Specifically, reference may be made to step 107, and description is not provided herein again.

The embodiment of the present invention provides a user grouping method; a user information parameter of a UE is received, and preconfigured mapping information is searched according to the user information parameter so as to determine group number information of a user group to which the UE belongs; the user group to which the UE belongs is identified according to group information, where the group information includes the group number information. Alternatively, the group information includes the group number information and PLMN ID information. Served users are grouped; in addition, resource allocation and performance statistics are performed on different user groups; so that it is possible for an operator to perform related processing on different user groups, and better services are provided for the operator.

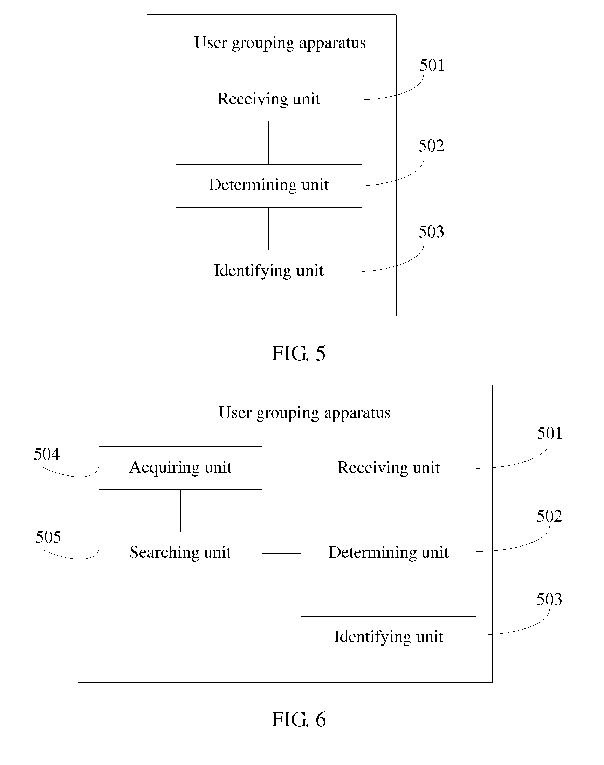

An embodiment of the present invention provides a user grouping apparatus. As shown in FIG. 5, the user grouping apparatus includes:

A receiving unit 501 is configured to receive a user information parameter of a user equipment UE.

The user information parameter is an information parameter used for identifying a feature of the UE.

Specifically, the receiving unit 501 is specifically configured to receive the user information parameter of the UE sent by a core network; or the receiving unit 501 is specifically configured to receive the user information parameter of the UE sent by a neighboring base station.

A determining unit 502 is configured to determine group number information of a user group to which the UE belongs according to the user information parameter of the UE received by the receiving unit 501 and preconfigured mapping information.

The mapping information is a mapping relationship between the user information parameter and the group number information of the user group, and is preconfigured according to an operating policy of an operator.

An identifying unit 503 is configured to identify the user group to which the UE belongs by using group information.

The group information includes the group number information determined by the determining unit 502.

As shown in FIG. 6, the above apparatus further includes:
an acquiring unit 504, configured to acquire a public land mobile network identity PLMN ID of the UE.

Referring to FIG. 6, the above apparatus further includes:
a searching unit 505, configured to find preconfigured mapping information corresponding to the UE according to the PLMN ID acquired by the acquiring unit 504.

The determining unit 502 is specifically configured to determine the group number information of the user group to which the UE belongs according to the user information parameter of the UE received by the receiving unit 501 and the preconfigured mapping information corresponding to the UE found by the searching unit 505.

Further, the group information further includes the PLMN ID.

In this case, the identifying unit 503 in the above user grouping apparatus is specifically configured to identify the user group to which the UE belongs by jointly using the group number information and the PLMN ID.

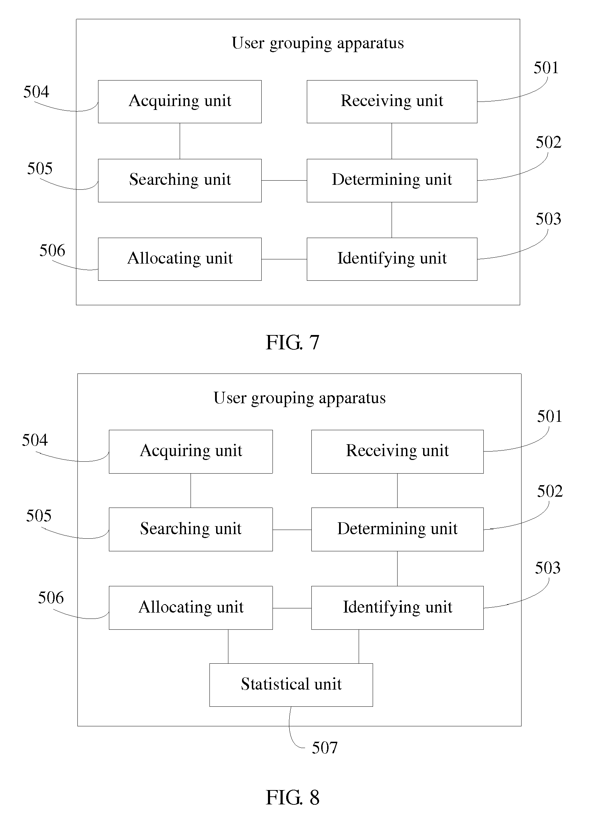

As shown in FIG. 7, the above apparatus further includes:
an allocating unit 506, configured to allocate resources to at least one user group according to a resource proportion of the at least one user group.

Further, the determining unit 502 is further configured to determine a priority of the at least one user group according to the resource proportion of the at least one user group and statistical information about used resources of the at least one user group.

The allocating unit 506 is specifically configured to first allocate the resources to a user group with a high priority determined by the determining unit 502.

Further, the allocating unit 506 is further configured to, in a situation in which a first user group is present, allocate resources of the first user group at a current moment to another user group.

The first user group is a user group that does not use any resource at the current moment.

Specifically, the allocating unit 506 is specifically configured to allocate the resources of the first user group at the current moment to another user group according to an attribute relationship between the another user group and the first user group.

As shown in FIG. 8, the above apparatus further includes:
a statistical unit 507, configured to carry out performance statistics on the at least one user group.

It should be noted that the user grouping apparatus may be a base station, a network controller, or other equipment, which is not limited in the present invention.

The embodiment of the present invention provides a user grouping apparatus, where a user information parameter of a UE is received, and preconfigured mapping information is searched according to the user information parameter so as to determine group number information of a user group to which the UE belongs; the user group to which the UE belongs is identified according to group information including the group number information or group information including the group number information and a PLMN ID, thereby grouping served users, so that it is possible for an operator to perform related processing on different user groups, and better services are provided for the operator.

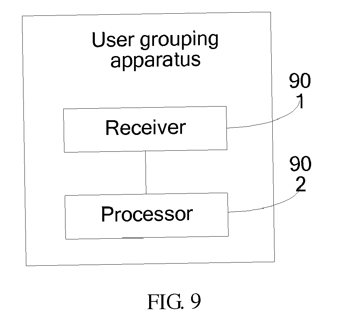

An embodiment of the present invention provides a user grouping apparatus. As shown in FIG. 9, the user grouping apparatus includes:

A receiver 901 is configured to receive a user information parameter of a user equipment UE.

The user information parameter is an information parameter used for identifying a feature of the UE.

Specifically, the receiver 901 is specifically configured to receive the user information parameter of the UE sent by a core network; or the receiver 901 is specifically configured to receive the user information parameter of the UE sent by a neighboring base station.

A processor 902 is configured to determine group number information of a user group to which the UE belongs according to the user information parameter of the user equipment UE received by the receiver 901 and preconfigured mapping information.

The mapping information is a mapping relationship between the user information parameter and the group number information of the user group, and is preconfigured according to an operating policy of an operator.

The processor 902 is further configured to identify the user group to which the UE belongs by using group information.

The group information includes the group number information.

The processor 902 is further configured to acquire a public land mobile network identity PLMN ID of the UE.

The processor 902 is further configured to find preconfigured mapping information corresponding to the UE according to the PLMN ID of the UE.

Specifically, the processor 902 is specifically configured to determine group number information of a user group to which the UE belongs according to the user information parameter of the UE and the preconfigured mapping information corresponding to the UE.

Further, the group information further includes the PLMN ID.

In this case, the processor 902 is specifically configured to identify the user group to which the UE belongs by jointly using the group number information and the PLMN ID.

The processor 902 is further configured to allocate resources to at least one user group according to a resource proportion of the at least one user group.

Specifically, the processor 902 is specifically configured to determine a priority of the at least one user group according to the resource proportion of the at least one user group and statistical information about used resources of the at least one user group.

Further, the processor 902 is specifically configured to first allocate the resources to a user group with a high priority.

Further, the processor 902 is further configured to, in a situation in which a first user group is present, allocate resources of the first user group at a current moment to another user group.

The first user group is a user group that does not use any resource at the current moment.

Specifically, the processor 902 is specifically configured to allocate the resources of the first user group at the current moment to another user group according to an attribute relationship between the another user group and the first user group.

The processor 902 is further configured to carry out performance statistics on the at least one user group.

It should be noted that the user grouping apparatus may be a base station, a network controller, or other equipment, which is not limited in the present invention.

The embodiments of the present invention provide a user grouping method and apparatus, where a user information parameter of a UE is received, and preconfigured mapping information is searched according to the user information parameter so as to determine group number information of a user group to which the UE belongs; the user group to which the UE belongs is identified according to group information including the group number information or group information including the group number information and a PLMN ID, thereby grouping served users, so that it is possible for an operator to perform related processing on different user groups, and better services are provided for the operator.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A user grouping method, comprising:
determining group number information of a user group to which a UE belongs according to a received user information parameter of the user equipment UE and preconfigured mapping information, wherein the mapping information is a mapping relationship between the user information parameter and the group number information of the user group, and is preconfigured according to an operating policy of an operator, and the user information parameter is an information parameter used for identifying a feature of the UE; and
identifying the user group to which the UE belongs by using group information, wherein the group information comprises: the group number information.

2. The method according to claim 1, wherein the received user information parameter of the user equipment UE comprises:
the received user information parameter of the UE sent by a core network.

3. The method according to claim 1, wherein the received user information parameter of the user equipment UE comprises:
the received user information parameter of the UE sent by a neighboring base station.

4. The method according to any one of claims 1-3, wherein before the determining group number information of a user group to which a UE belongs according to a received user information parameter of the user equipment UE and preconfigured mapping information, the method further comprises:
acquiring a public land mobile network identity PLMN ID of the UE.

5. The method according to claim 4, wherein before the determining group number information of a user group to which a UE belongs according to a received user information parameter of the user equipment UE and preconfigured mapping information, and after the acquiring a public land mobile network identity PLMN ID of the UE, the method further comprises:
finding the preconfigured mapping information corresponding to the UE according to the PLMN ID.

6. The method according to claim 4 or 5, wherein the group information further comprises the PLMN ID;
the identifying the user group to which the UE belongs by using group information comprises:
identifying the user group to which the UE belongs by jointly using the group number information and the PLMN ID.

7. The method according to any one of claims 1-6, wherein the user information parameter comprises: a subscriber profile ID for RAT/frequency priority SPID, or a quality of service class identifier QCI, or another message field of an interface.

8. The method according to any one of claims 1-7, further comprising:
allocating resources to at least one user group according to a resource proportion of the at least one user group.

9. The method according to claim 8, wherein the allocating resources to at least one user group according to a resource proportion of the at least one user group comprises:
determining a priority of the at least one user group according to the resource proportion of the at least one user group and statistical information about used resources of the at least one user group; and
first allocating the resources to a user group with a high priority.

10. The method according to claim 8 or 9, further comprising:
if a first user group is present, allocating resources of the first user group at a current moment to another user group, wherein the first user group is a user group that does not use any resource at the current moment.

11. The method according to claim 10, wherein the allocating resources of the first user group at a current moment to another user group comprises:
allocating, according to an attribute relationship between another user group and the first user group, the resources of the first user group at the current moment to the another user group.

12. The method according to any one of claims 1-11, further comprising:
carrying out performance statistics on the at least one user group.

13. A user grouping apparatus, comprising:
a determining unit, configured to determine group number information of a user group to which a UE belongs according to a received user information parameter of the user equipment UE and preconfigured mapping information, wherein the mapping information is a mapping relationship between the user information parameter and the group number information of the user group, and is preconfigured according to an operating policy of an operator, and the user information parameter is an information parameter used for identifying a feature of the UE; and
an identifying unit, configured to identify the user group to which the UE belongs by using group information, wherein the group information comprises: the group number information.

14. The apparatus according to claim 13, wherein the received user information parameter of the user equipment UE comprises:
the received user information parameter of the UE sent by a core network.

15. The apparatus according to claim 13, wherein the received user information parameter of the user equipment UE comprises:
the received user information parameter of the UE sent by a neighboring base station.

16. The apparatus according to any one of claims 13-15, further comprising:
an acquiring unit, configured to acquire a public land mobile network identity PLMN ID of the UE.

17. The apparatus according to claim 16, further comprising:
a searching unit, configured to find preconfigured mapping information corresponding to the UE according to the PLMN ID acquired by the acquiring unit;
wherein the determining unit is specifically configured to determine the group number information of the user group to which the UE belongs according to the received user information parameter of the UE and the preconfigured mapping information corresponding to the UE found by the searching unit.

18. The apparatus according to claim 16 or 17, wherein the group information further comprises the PLMN ID;
the identifying unit is specifically configured to identify the user group to which the UE belongs by jointly using the group number information and the PLMN ID.

19. The apparatus according to any one of claims 13-18, further comprising:
an allocating unit, configured to allocate resources to at least one user group according to a resource proportion of the at least one user group.

20. The apparatus according to claim 19, wherein
the determining unit is further configured to determine a priority of the at least one user group according to the resource proportion of the at least one user group and statistical information about used resources of the at least one user group; and
the allocating unit is specifically configured to first allocate the resources to a user group with a high priority determined by the determining unit.

21. The apparatus according to claim 19 or 20, wherein the allocating unit is further configured to, in a situation in which a first user group is present, allocate resources of the first user group at a current moment to another user group, and the first user group is a user group that does not use any resource at the current moment.

22. The apparatus according to claim 21, wherein the allocating unit is specifically configured to allocate the resources of the first user group at the current moment to another user group according to an attribute relationship between the another user group and the first user group.

23. The apparatus according to any one of claims 13-22, further comprising:
a statistical unit, configured to carry out performance statistics on the at least one user group.

24. A user grouping apparatus, comprising:
a processor, configured to determine group number information of a user group to which a UE belongs according to a received user information parameter of the user equipment UE and preconfigured mapping information, wherein the mapping information is a mapping relationship between the user information parameter and the group number information of the user group, and is preconfigured according to an operating policy of an operator, and the user information parameter is an information parameter used for identifying a feature of the UE;
wherein the processor is further configured to identify the user group to which the UE belongs by using group information, and the group information comprises the group number information.
